# FASCICULE DE BREVET EUROPEEN

(11) **EP 3 381 212 B1**
(45) Date de publication et mention de la délivrance du brevet: **26.02.2020**
(21) Numéro de dépôt: 16815592.7
(22) Date de dépôt: 24.11.2016
(51) Int. Cl.: H04W 12/06, H04W 48/12, H04W 84/12

(54) **TECHNIQUE DE CONTROLE D'ACCES A UN RESEAU D'ACCES RADIO**
VERFAHREN ZUR STEUERUNG DES ZUGANGS ZU EINEM FUNKZUGANGSNETZ
TECHNIQUE FOR CONTROLLING ACCESS TO A RADIO ACCESS NETWORK

(30) Priorité: 27.11.2015 FR 1561502
(43) Date de publication de la demande: 03.10.2018
(73) Titulaire: Orange, 75015 Paris (FR)
(72) Inventeur: GLOANEC, Simon, 35000 Rennes (FR); MARCHAND, Hervé, 35770 Vern Sur Seiche (FR)
(86) Numéro de dépôt international: PCT/FR2016/053071
(87) Numéro de publication internationale: WO 2017/089709

(56) Documents cités:
- EP-A1- 2 426 968
- EP-A1- 2 747 370

## Description

L'invention se rapporte au domaine général des télécommunications.

L'invention concerne plus particulièrement une technique de contrôle d'accès à un réseau d'accès radio administré par un dispositif d'accès. Ce dispositif d'accès permet d'autoriser un accès au réseau d'accès radio d'un dispositif utilisateur en fonction d'adresses physiques de dispositifs autorisés ou de bloquer cet accès à un dispositif utilisateur dont l'adresse physique n'est pas une adresse physique d'un dispositif autorisé.

Le dispositif d'accès correspond par exemple à un point d'accès radio. Ce point d'accès radio peut être mis en œuvre par une passerelle d'accès, permettant à des dispositifs utilisateur localisés dans un site client d'accéder à un réseau de communication étendu WAN (pour « Wide Area Network »), tel que le réseau Internet. Ces dispositifs correspondent par exemple à un décodeur TV « Set-Top-Box », un terminal mobile. Certains de ces dispositifs s'échangent des données dans le réseau local au moyen du réseau d'accès radio, par l'intermédiaire de canaux de communication radio, en utilisant notamment la technologie de transmission sans fil basée sur la norme de réseau radioélectrique IEEE 802.11 et ses évolutions communément regroupées sous l'appellation Wi-Fi (pour « Wireless Fidelity »). Afin de renforcer la sécurité sur le réseau d'accès radio, le dispositif d'accès peut également mettre en œuvre une fonction connue sous le nom de filtrage en fonction d'adresses physiques, telles que des adresses MAC (pour « Médium Access Control »). Une telle adresse MAC permet d'identifier chaque dispositif. La fonction de filtrage en fonction d'adresses MAC permet de limiter l'accès à des dispositifs dont l'adresse MAC est connue par le dispositif d'accès. Un dispositif dont l'adresse n'est pas autorisée ne peut ainsi accéder au réseau d'accès radio.

La mise en œuvre de cette fonction pose le problème de la gestion des adresses MAC autorisées à se connecter, notamment dans le cas de dispositifs se connectant de manière temporaire au réseau d'accès radio. Il est généralement complexe pour un utilisateur du dispositif d'accès de définir les adresses MAC autorisées. Il est nécessaire dans un premier temps qu'il se connecte en tant qu'administrateur pour exécuter un logiciel d'administration du dispositif d'accès. Pour certains types de points d'accès, l'administrateur doit dans un deuxième temps renseigner manuellement les adresses MAC autorisées. On rappelle ici que l'adresse MAC se présente sous la forme de six paires de caractères composées de chiffres, de 0 à 9, et de lettres de a à f, par exemple 59:le:4a:c4:21:04. Pour d'autres types de points d'accès, l'administrateur peut activer le filtrage sans avoir défini d'adresses MAC autorisées et se trouver empêché par la suite d'accéder à un menu de configuration de la fonction, du fait de son accès avec un dispositif sans fil non autorisé. Pour ces raisons, la fonction de filtrage en fonction d'adresses MAC n'est ainsi généralement pas mise en œuvre.

Le document EP2747370A1 décrit un procédé de contrôle d'accès à un réseau d'accès radio par une passerelle dans lequel celle-ci transmet des informations d'accès à un dispositif grâce à des moyens de communication en champ proche et obtient une information d'identification du dispositif grâce à ces moyens.

Un des buts de l'invention est de remédier à des insuffisances/inconvénients de l'état de la technique et/ou d'y apporter des améliorations. L'invention est décrite dans les revendications.

Selon un premier aspect, l'invention a pour objet un procédé de contrôle d'accès à un réseau d'accès radio administré par un dispositif d'accès. Ce procédé comprend :
- obtention d'une donnée indiquant qu'une présence d'un utilisateur a été détectée dans une zone de détection ;
- réception par le dispositif d'accès en provenance d'un dispositif requérant d'une demande d'accès au réseau d'accès radio, l'accès au réseau d'accès radio étant interdit par le dispositif d'accès pour un dispositif d'adresse physique correspondant à celle dudit dispositif requérant ;
- autorisation, par le dispositif d'accès, d'accès au réseau d'accès radio du dispositif requérant identifié par ladite adresse.

On appelle adresse physique une adresse identifiant un dispositif. Cette adresse est transmise par le dispositif pour un accès au niveau d'une sous-couche MAC de contrôle d'accès au support. Elle est connue sous le nom d'adresse MAC.

Préalablement à la réception par le dispositif d'accès de la demande d'accès, le dispositif requérant n'est pas autorisé à accéder au réseau d'accès, bien qu'il partage éventuellement une clé secrète avec le dispositif d'accès. C'est notamment le cas lorsque le dispositif d'accès met en œuvre une fonction de filtrage en fonction d'adresses physiques identifiant des dispositifs autorisés à accéder.

Grâce au procédé de contrôle d'accès, l'accès au réseau d'accès radio d'un dispositif d'adresse physique correspondant à celle du dispositif requérant devient autorisé, sans nécessiter de connexion d'un administrateur du dispositif d'accès à un logiciel d'administration de ce dernier. La gestion des autorisations d'accès est ainsi très simple pour l'administrateur du dispositif d'accès. Du fait de cette simplicité, la sécurité pour l'accès aux ressources offertes par le dispositif d'accès peut être augmentée, en mettant en œuvre la fonction de filtrage en fonction d'adresses physiques.

Les adresses physiques autorisées sont par exemple gérées sous la forme d'une liste de dispositifs autorisés. L'adresse du dispositif requérant est ajoutée à cette liste de dispositifs autorisés, lorsque l'utilisateur se situe dans une zone de détection. Ainsi, lors d'un accès ultérieur, l'utilisateur ne devra pas se trouver obligatoirement dans la zone de détection pour pouvoir accéder au réseau d'accès.

On entend par demande d'accès un message envoyé par le dispositif requérant au dispositif d'accès. Ce message comprend notamment une adresse physique du dispositif requérant. Selon les implémentations de la fonction de filtrage en fonction d'adresses au niveau du dispositif d'accès, la demande d'accès peut correspondre à un message de demande d'association (ou «Association Request »), à un message de demande d'authentification (ou « Authenticate Request ») ou bien encore à tout autre message envoyé par le dispositif requérant au niveau de la sous-couche MAC de contrôle d'accès au support.

La donnée indiquant qu'une présence d'un utilisateur a été détectée est par exemple obtenue à partir d'un capteur détecteur de présence. Ce capteur peut être intégré au dispositif d'accès ou bien co-localisé avec celui-ci. La zone de détection dépend ainsi de performances et d'une configuration d'un détecteur de présence.

Le dispositif d'accès est par exemple une passerelle d'accès, permettant aux dispositifs d'un réseau local d'accéder à un réseau de communication étendu WAN. Une telle passerelle d'accès est installée dans une habitation et la présence d'un utilisateur dans la zone de détection est ainsi restreinte à des personnes de cette habitation ou autorisées à y accéder.

Dans un mode de réalisation particulier, le réseau d'accès radio est un réseau radio Wi-Fi.

Les différents modes ou caractéristiques de réalisation mentionnés ci-après peuvent être ajoutés indépendamment ou en combinaison les uns avec les autres, aux étapes du procédé de contrôle d'accès tel que défini précédemment.

Dans un mode de réalisation particulier, le procédé de contrôle d'accès comprend une diffusion par le dispositif d'accès d'un identifiant du réseau d'accès radio déclenchée par ladite obtention d'une donnée.

Par défaut, la diffusion de l'identifiant du réseau d'accès n'est pas activée. Ainsi, le réseau d'accès radio n'est pas identifiable par des dispositifs non autorisés à accéder.

Une fois une présence détectée dans la zone de détection, l'identifiant de réseau est diffusé afin de permettre à un dispositif non autorisé de détecter le réseau d'accès radio. Le dispositif requérant peut alors devenir un dispositif autorisé à accéder.

Ainsi, la sécurité pour l'accès aux ressources offertes par le dispositif d'accès peut être encore augmentée, en conditionnant la diffusion de l'identifiant du réseau à une détection d'une présence d'un utilisateur dans la zone de détection.

Dans un mode de réalisation particulier, l'autorisation est donnée uniquement lorsque la demande d'accès est reçue pendant un intervalle temporel postérieur à ladite obtention.

La modification des autorisations d'accès n'est ainsi possible que pour une durée limitée une fois la donnée obtenue.

Dans un mode de réalisation particulier, le procédé de contrôle d'accès comprend en outre une obtention d'une autre donnée indiquant qu'une sortie d'un utilisateur de la zone de détection a été détectée, et dans lequel l'accès au réseau d'accès radio est refusé après obtention de ladite autre donnée.

Ainsi, le réseau d'accès radio ne reste pas ouvert pour autoriser de nouveaux dispositifs, une fois la sortie de la zone de détection détectée.

Selon un deuxième aspect, l'invention concerne également un dispositif d'accès à un réseau d'accès radio, ledit dispositif comprenant ;
- un module d'obtention d'une donnée, agencé pour obtenir une donnée indiquant qu'une présence d'un utilisateur a été détectée dans une zone de détection ;
- un module de réception, agencé pour recevoir en provenance d'un dispositif requérant une demande d'accès au réseau d'accès radio ;
- un module de gestion d'adresses, agencé pour autoriser un accès au réseau d'accès radio au dispositif requérant identifié par ladite adresse, suite à l'obtention de ladite donnée, l'accès au réseau d'accès radio étant interdit préalablement pour un dispositif d'adresse physique correspondant à celle dudit dispositif requérant.

Les avantages énoncés pour le procédé de contrôle d'accès selon le premier aspect sont transposables directement au dispositif d'accès.

Dans un mode de réalisation particulier, ce dispositif d'accès est une passerelle d'accès permettant un accès à un réseau de communication étendu à des dispositifs d'un réseau local, notamment des dispositifs accédant au réseau d'accès radio.

Selon un troisième aspect, l'invention concerne un programme pour un dispositif d'accès, comprenant des instructions de code de programme destinées à commander l'exécution des étapes du procédé de contrôle d'accès précédemment décrit mises en œuvre par le dispositif d'accès, lorsque ce programme est exécuté par ce dispositif et un support d'enregistrement lisible par un dispositif d'accès sur lequel est enregistré un programme pour un dispositif.

Les avantages énoncés pour le procédé de contrôle d'accès selon le premier aspect sont transposables directement au programme pour un dispositif d'accès et au support d'enregistrement.

L'invention sera mieux comprise à l'aide de la description suivante de modes de réalisation particuliers de la technique de contrôle d'accès, en référence aux dessins annexés sur lesquels :
- la figure 1 représente un réseau local dans lequel est mise en œuvre la technique de contrôle d'accès selon un mode particulier de réalisation ;
- les figures 2a-2c illustrent une zone de détection dans laquelle une présence d'un utilisateur est détectable ;
- les figures 3a-3b illustrent des étapes d'un procédé de contrôle d'accès selon des modes particuliers de réalisation ;
- la figure 4 représente un dispositif d'accès selon un mode particulier de réalisation.

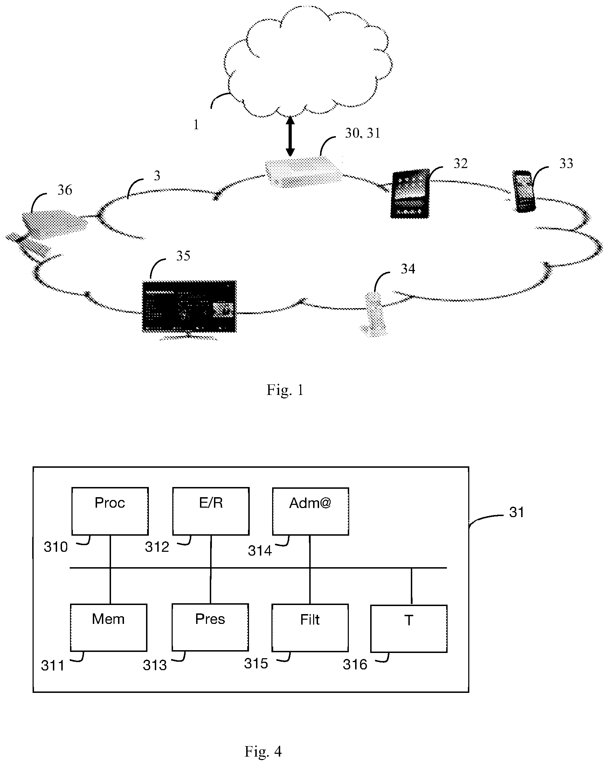

La figure 1 représente un réseau de communication privé ou local 3. Le protocole IP (pour « Internet Protocol ») est utilisé par les dispositifs dans le réseau local pour communiquer entre eux et également pour communiquer avec un réseau de communication étendu ou WAN (pour « Wide Area Network »), tel que le réseau Internet.

Pour l'environnement représenté à la figure 1, on entend par réseau de communication local 3 un réseau de type LAN (« Local Access Network »). Ce réseau peut être en particulier un réseau domestique ou un réseau d'entreprise. Une passerelle d'accès 30 est agencée pour fournir à des dispositifs du réseau local 3 un accès vers le réseau de communication étendu (par exemple Internet) par l'intermédiaire d'un réseau d'accès 1. La passerelle d'accès 30 assure l'acheminement des données entre le réseau d'accès 1 et le réseau local 3. Il s'agit par exemple d'une passerelle domestique ou bien d'une passerelle d'entreprise. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home ») ou d'un réseau mobile tel qu'un réseau 3G ou 4G. Aucune limitation n'est attachée au type du réseau d'accès 1.

Les dispositifs 32-36 du réseau local 3 peuvent être n'importe quels dispositifs, par exemple domestiques, disposant d'une connexion réseau filaire ou sans fil. A titre d'exemples illustratifs, différents dispositifs sont représentés sur la figure 1. Il peut s'agir par exemple d'une tablette tactile 32, d'un terminal mobile 33, d'un téléphone fixe 34, d'un ordinateur 35, d'un décodeur TV 36 (« Set-Top Box »), d'une console de jeux, de dispositifs électroménagers, etc.

Le réseau local 3 est au moins en partie un réseau d'accès radio sans fil de type Wi-Fi, selon la norme IEEE 802.11 « Wireless LAN Médium Access Control (MAC) and Physical Layer (PHY) Spécifications » (802.11a/b/g/n/ac). La passerelle d'accès 30 est agencée pour communiquer avec certains des dispositifs 32, 33 du réseau local par l'intermédiaire du réseau d'accès radio. A ce titre, la passerelle d'accès 30 est un dispositif d'accès 31 administrant le réseau d'accès radio. Tels que représentés à la figure 1, les dispositifs 32, 33 sont agencés pour demander une connexion au réseau d'accès radio par l'intermédiaire de ce réseau d'accès radio et pour ensuite communiquer par l'intermédiaire du réseau d'accès radio. Les dispositifs du réseau local peuvent accéder au réseau de communication étendu (Internet) par l'intermédiaire de la passerelle d'accès et du réseau d'accès 1. Les échanges avec ces dispositifs 32, 33 s'effectuent au niveau de la passerelle 30, et donc du dispositif d'accès 31, par l'intermédiaire d'un module d'accès radio 312. Il est ici souligné que la passerelle d'accès 30 peut communiquer également avec certains autres dispositifs du réseau local par l'intermédiaire d'une connexion réseau filaire, comme par exemple avec l'ordinateur 35.

Aucune limitation n'est attachée au nombre de ces dispositifs 32, 33, ni aux types de ces dispositifs. Par ailleurs, la figure 1 illustre un mode de réalisation dans lequel le dispositif d'accès 31 administrant le réseau d'accès radio est intégré dans la passerelle d'accès 30. Aucune limitation n'est attachée à cette représentation. Dans la suite de la description, on se place au niveau du dispositif d'accès 31, dans lequel la technique de contrôle d'accès est mise en œuvre.

Le dispositif d'accès 31 met également en œuvre une fonction de filtrage en fonction d'adresses physiques, telles que des adresses MAC (pour « Médium Access Control »), pour un accès au réseau d'accès radio. Une telle adresse MAC est associée à chacun des dispositifs et permet d'identifier le dispositif. La fonction de filtrage en fonction d'adresses MAC permet de limiter l'accès à des dispositifs dont l'adresse MAC est autorisée par le dispositif d'accès 31. Un dispositif dont l'adresse n'est pas autorisée ne peut pas par conséquent accéder au réseau d'accès radio. Un dispositif autorisé est ainsi un dispositif dont l'adresse est connue du dispositif d'accès. Ce dispositif autorisé connait le cas échéant la clé de sécurité.

Le dispositif d'accès 31 comprend en outre un module de détection de présence 313, agencé pour obtenir une donnée indiquant qu'une présence d'un utilisateur a été détectée dans une zone de détection. Le module de détection de présence 313 est dans un mode de réalisation un capteur de détection de présence. Ce capteur de détection de présence est par exemple un détecteur de proximité optique, dont la sortie dépend de la comparaison d'un niveau de lumière réfléchie par rapport à un seuil. A titre d'exemple illustratif, le module de détection de présence 313 est un composant Si1102 de la société Silicon Labs.

Dans un autre mode de réalisation particulier, le capteur de détection de présence est co-localisé avec le dispositif d'accès 31 et fournit au module de détection de présence 313 la donnée indiquant qu'une présence d'un utilisateur a été détectée dans une zone de détection.

Par ailleurs, l'utilisateur peut être informé que sa présence a été détectée par une indication, telle que l'éclairage d'une diode électroluminescente ou led (pour « Light-Emitting Diode ») du dispositif d'accès ou bien un affichage sur un écran du dispositif d'accès.

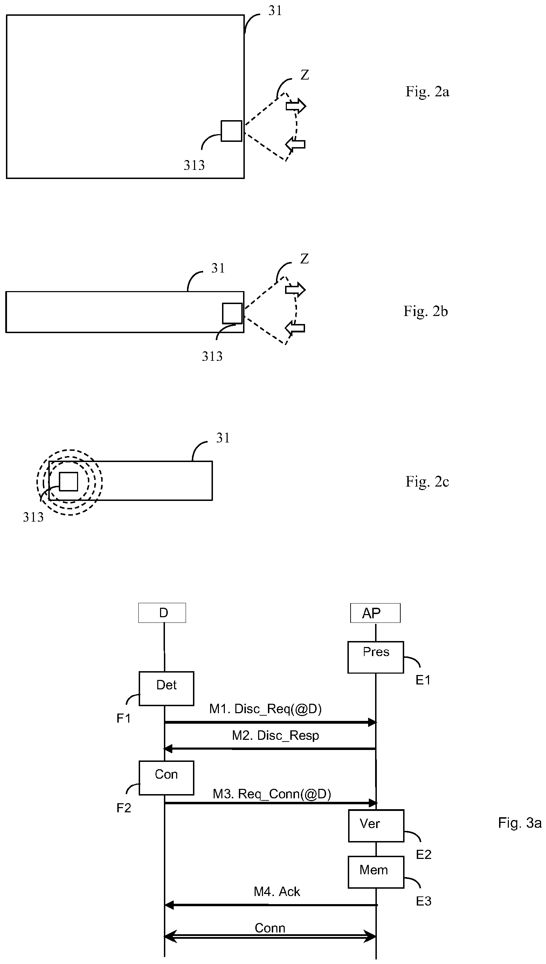

Les figures 2a-2c illustrent dans un mode de réalisation particulier une zone de détection Z dans laquelle une présence d'un utilisateur est détectable. La figure 2a représente le dispositif d'accès 31, vu de dessus et la figure 2b représente ce même dispositif, vu de côté. La zone de détection Z est représentée sous la forme d'un secteur circulaire centré sur le module 313. L'entrée ou la sortie d'un utilisateur dans la zone de détection, symbolisées avec des flèches sur les figures 2a et 2b, sont par exemple détectées à une distance d'une quinzaine de centimètres (seuil de détection). On comprend ainsi que le module de détection 313 est agencé pour détecter une proximité de l'utilisateur par rapport au dispositif d'accès 31. L'utilisateur est alors à une distance lui permettant d'interagir avec le dispositif d'accès 31, par exemple par l'intermédiaire d'une interface homme-machine. Le seuil de détection doit rester relativement faible, par exemple inférieur à un mètre. En effet, seul un seuil de détection faible permet d'apporter des garanties de sécurité suffisantes pour configurer un mécanisme de sécurité. Un seuil de l'ordre de quinze centimètres permet de détecter uniquement des utilisateurs à portée de main du dispositif d'accès 31. La figure 2c représente quant à elle le dispositif d'accès 31 vu de face. Le module de détection 313 est par exemple situé juste derrière une façade du dispositif d'accès 31. La zone de détection Z correspond à un disque centré sur le module de détection 313.

Dans un mode de réalisation particulier, la donnée indiquant qu'une présence d'un utilisateur est détectée correspond à un évènement « entrée dans la zone de détection ». Dans un mode de réalisation particulier, une autre donnée indiquant qu'une sortie d'un utilisateur de la zone de détection a été détectée est obtenue. Cette autre donnée correspond à un évènement « sortie de la zone de détection ».

Le procédé de contrôle d'accès prend ainsi en compte la donnée indiquant qu'une présence d'un utilisateur a été détectée dans la zone de détection Z pour autoriser un accès d'un dispositif utilisateur 32, 33 au réseau d'accès radio, lui permettant d'établir une connexion avec le dispositif d'accès 31. L'adresse physique de ce dispositif utilisateur est alors ajoutée à la liste des dispositifs autorisés à accéder au réseau d'accès radio. Une demande d'accès ultérieure de ce dispositif utilisateur 32, 33 ne sera pas bloquée par le dispositif d'accès 31.

On rappelle ici brièvement les opérations à effectuer dans un mode de réalisation particulier de l'état de la technique pour configurer une liste de dispositifs autorisés à accéder au réseau d'accès radio. L'ordinateur 35 est connecté au dispositif d'accès 31 par l'intermédiaire d'une liaison filaire, par exemple Ethernet. L'administrateur du réseau local 3 se connecte au logiciel d'administration du dispositif d'accès 31 à partir de l'ordinateur 35. L'administrateur active la fonction de filtrage en fonction d'adresses MAC et configure cette liste en saisissant l'adresse MAC de chacun des dispositifs autorisés à accéder. Par comparaison, grâce au procédé de contrôle d'accès, l'adresse d'un dispositif utilisateur, demandant à accéder, est ajoutée à la liste des dispositifs autorisés à accéder, lorsqu'un utilisateur, et donc son dispositif, se trouvent dans la zone de détection Z, sans nécessiter de connexion d'un administrateur. Ceci simplifie pour l'administrateur du dispositif d'accès 31 la mise en œuvre du filtrage en fonction d'adresses MAC. Cette dernière est alors plus souvent activée par l'administrateur et ceci renforce la sécurité de l'accès au réseau d'accès radio.

Dans un mode de réalisation particulier, le mécanisme de sécurité WPA (pour « Wi-Fi Protected Access ») est utilisé. Les deux dispositifs utilisateur 32, 33 partagent avec le dispositif d'accès 31 une clé secrète K, également appelée clé de sécurité. Lorsque l'accès du dispositif utilisateur 32, 33 au réseau d'accès est autorisé, des étapes d'authentification et d'association sont mises en œuvre par le dispositif utilisateur 32, 33 et le dispositif d'accès 31. Les données envoyées entre le dispositif utilisateur 32, 33 et le dispositif d'accès 31 sont ensuite chiffrées au moyen de la clé de sécurité. Il est également possible de mettre en œuvre d'autres mécanismes de sécurité tels que WEP (pour « Wired Equivalent Privacy »), WPA2.

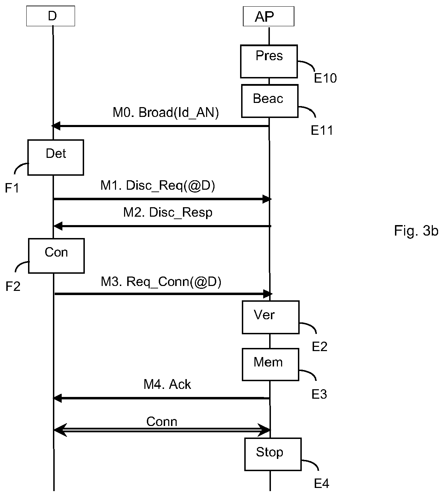

La technique de contrôle d'accès, mise en œuvre par le dispositif d'accès 31, va maintenant être décrite de manière plus précise dans des modes particuliers de réalisation dans l'environnement de la figure 1 en relation avec les figures 3a et 3b. A titre illustratif, à l'état initial, aucun des dispositifs 32, 33 n'est autorisé à accéder au réseau d'accès radio. On se place dans le mode de réalisation particulier où le dispositif utilisateur 32 partage avec le dispositif d'accès 31 la clé de sécurité.

La figure 3a décrit plus précisément les échanges entre le dispositif d'accès 31 et le dispositif utilisateur 32 lors d'une demande d'accès effectuée par ce dispositif utilisateur, dans un premier mode de réalisation. Il est ici rappelé que le dispositif d'accès 31 et le dispositif utilisateur 32 communiquent au moyen du réseau d'accès radio, plus précisément sur un canal de communication du réseau d'accès radio.

Un signal pilote portant un identifiant de réseau d'accès est diffusé par le dispositif d'accès 31. L'identifiant de réseau d'accès est connu sous le nom de SSID (pour «Service Set Identifier »).

Dans une étape F1, le dispositif utilisateur 32 détecte le réseau d'accès radio. Plus précisément, le dispositif utilisateur 32 reçoit le signal pilote diffusé et lit l'identifiant de réseau d'accès. Toujours dans cette étape F1, le dispositif utilisateur 32, également appelé dispositif requérant, envoie un message M1 de découverte « Probe Request » à destination du dispositif d'accès 31. Un message de réponse M2 est transmis au dispositif utilisateur 32. Le message M2 correspond à un message « Probe Response ».

Dans une étape F2, le dispositif utilisateur 32 envoie une demande d'accès M3 au réseau d'accès radio. Cette demande d'accès M3 correspond à un message de demande d'authentification « Authenticate Request ». Ce message comprend notamment un identifiant de dispositif sous la forme de son adresse physique MAC. On rappelle ici que l'accès au réseau d'accès radio est initialement interdit (ou bloqué) par le dispositif d'accès 31 pour un dispositif d'adresse physique correspondant à celle de ce dispositif requérant 32.

Cette demande d'accès M3 est reçue par le dispositif d'accès 31 dans une étape E2. Toujours dans cette étape E2, le dispositif d'accès 31 vérifie si le dispositif utilisateur 32 est autorisé à accéder. Cette vérification est réalisée notamment à partir d'une liste d'adresses MAC autorisées. Si le dispositif utilisateur 32 est autorisé à accéder, l'établissement de la connexion se poursuit. Les échanges ne sont pas plus détaillés ici. Si le dispositif utilisateur 32 n'est pas autorisé à accéder, le dispositif d'accès 31 vérifie si une donnée indiquant qu'une présence d'un utilisateur a été détectée dans la zone de détection Z, a été obtenue lors d'une étape E1. Il est ici souligné que l'ordre d'exécution de ces deux étapes E1 et E2 est indifférent. En effet, le dispositif utilisateur peut par exemple initier l'envoi de la demande d'accès conduisant à l'exécution de l'étape E2 en dehors de la zone de détection Z et se situer ensuite dans la zone de détection (étape E1), afin de permettre l'ajout de son adresse dans la liste des dispositifs autorisés. Toujours à titre d'exemple, le dispositif utilisateur peut initier l'envoi de la demande d'accès conduisant à l'exécution de l'étape E2 dans la zone de détection Z, la donnée indiquant qu'une présence d'un utilisateur a été détectée (étape El) ayant alors été obtenue préalablement à l'étape E2. Il est bien entendu qu'il existe toutefois un lien temporel entre l'exécution de ces deux étapes. Ceci est décrit par la suite.

Si une donnée indiquant qu'une présence d'un utilisateur a été détectée dans la zone de détection Z a été obtenue lors d'une étape E1, l'accès du dispositif utilisateur 32, identifié par son adresse MAC, au réseau d'accès radio est autorisé par le dispositif d'accès 31. L'adresse MAC du dispositif requérant est ajoutée dans la liste d'adresses MAC autorisées dans une étape E3. Cette adresse MAC est obtenue à partir de la demande d'accès M3 reçue à l'étape E2 par l'intermédiaire du réseau d'accès radio. L'accès au réseau d'accès radio est alors autorisé par le dispositif d'accès 31 pour un dispositif d'adresse physique correspondant à celle de ce dispositif requérant 32. Un message d'acquittement M4 est transmis au dispositif utilisateur 32. Le message M4 correspond à un message « Authenticate Response ». La connexion est ensuite établie entre le dispositif utilisateur 32 et le dispositif d'accès 31 par mise en œuvre d'une étape d'association, non détaillée ici. A l'issue de ces étapes, le dispositif utilisateur 32 est associé avec le dispositif d'accès 31 sur le réseau d'accès radio et peut ainsi transmettre et recevoir des données en provenance d'autres dispositifs du réseau radio. Une connexion est ainsi établie entre le dispositif utilisateur 32 et le dispositif d'accès 31 sur le réseau d'accès radio. La gestion de la liste d'adresses MAC est ainsi simplifiée pour l'administrateur du dispositif d'accès 31.

Le procédé de contrôle d'accès est plus précisément défini en fonction des différents modes de mise en œuvre du filtrage en fonction d'adresses MAC. Dans un mode de réalisation particulier, il est nécessaire de désactiver cette fonction, afin de pouvoir traiter la demande d'accès M3. Cette désactivation est effectuée suite à l'exécution de l'étape E1. Une temporisation T est alors déclenchée afin de superviser la réception de la demande d'accès. Une fois la temporisation expirée, la fonction de filtrage en fonction d'adresses MAC est activée de nouveau. En effet, le réseau d'accès radio ne doit pas rester « ouvert » (pour autoriser de nouveaux dispositifs) pendant un intervalle temporel trop important. A titre d'exemple illustratif, la temporisation T est fixée à cinq minutes. Dans un mode de réalisation particulier complémentaire, la fonction de filtrage en fonction d'adresses MAC est activée de nouveau, une fois une demande d'accès traitée par le dispositif d'accès. Un seul dispositif utilisateur est ainsi autorisé à la fois.

Dans un autre mode de réalisation, la fonction de filtrage en fonction d'adresses MAC reste activée. Le dispositif utilisateur 32 est alors en attente d'autorisation et devient autorisé suite à l'obtention de la donnée à l'étape E1.

Dans un autre mode de réalisation, une donnée indiquant qu'une sortie d'un utilisateur de la zone de détection a été détectée est obtenue. Dans ce cas, l'accès au réseau d'accès radio est refusé pour une demande reçue après obtention de cette donnée. Ainsi, le réseau d'accès radio ne reste pas ouvert pour autoriser de nouveaux dispositifs, une fois la sortie de la zone de détection détectée.

Ces modes de réalisation ont été décrits pour une configuration du filtrage en fonction d'adresses MAC mise en œuvre pour une réception d'une demande d'accès correspondant à un message « Authenticate Request ». Dans un autre mode de réalisation, la configuration du filtrage en fonction d'adresses MAC est mise en œuvre après authentification du dispositif utilisateur 32 avec le dispositif d'accès 31. La demande d'accès M3 correspond alors à un message « Association Request » envoyé par le dispositif utilisateur 32 et le message d'acquittement M4 correspond à un message «Association Response ». Dans encore un autre mode de réalisation, le réseau d'accès radio n'est pas protégé par une clé de sécurité. La demande d'accès M3 correspond alors à un message « Association Request » envoyé par le dispositif utilisateur 32 et le message d'acquittement M4 correspond à un message « Association Response ».

Le procédé de contrôle d'accès est ainsi aisément transposable par l'homme du métier suivant la mise en œuvre du filtrage en fonction d'adresses MAC au niveau du dispositif d'accès 31.

La figure 3b décrit plus précisément les échanges entre le dispositif d'accès 31 et le dispositif utilisateur 32 lors d'une demande d'accès effectuée par ce dispositif utilisateur, dans un deuxième mode de réalisation.

A l'état initial, le dispositif d'accès 31 diffuse un signal pilote ne comprenant pas d'identifiant de réseau d'accès. Le réseau d'accès radio est ainsi masqué aux dispositifs utilisateur n'ayant pas connaissance de l'identifiant de réseau. Ce mécanisme permet de renforcer la sécurité du réseau d'accès radio.

Dans une étape E10, similaire à l'étape E1 décrite en relation avec le premier mode de réalisation, le dispositif d'accès 31 obtient une donnée indiquant qu'une présence d'un utilisateur a été détectée dans la zone de détection Z.

Dans une étape E11, déclenchée par l'obtention d'une donnée à l'étape E10, le dispositif d'accès 31 modifie le signal pilote diffusé M0 afin que celui-ci porte un identifiant de réseau d'accès. Ainsi, un dispositif utilisateur peut détecter le réseau d'accès radio et tenter de s'y connecter.

A l'étape F1, le dispositif utilisateur 32 détecte le réseau d'accès radio. Plus précisément, le dispositif utilisateur 32 reçoit le signal pilote diffusé et lit l'identifiant de réseau d'accès. Toujours dans cette étape F1, le dispositif utilisateur 32, également appelé dispositif requérant, envoie un message M1 de découverte « Probe Request » à destination du dispositif d'accès 31. Un message de réponse M2 est transmis au dispositif utilisateur 32. Le message M2 correspond à un message « Probe Response ».

Dans une étape F2, le dispositif utilisateur 32 envoie une demande d'accès M3 au réseau d'accès radio, comme décrit précédemment en relation avec le premier mode de réalisation. On rappelle ici que l'accès au réseau d'accès radio est initialement interdit par le dispositif d'accès 31 pour un dispositif d'adresse physique correspondant à celle du dispositif requérant 32.

Cette demande d'accès M3 est reçue par le dispositif d'accès 31 à l'étape E2. Toujours dans cette étape E2, le dispositif d'accès 31 vérifie si le dispositif utilisateur 32 est autorisé à accéder. Cette vérification est réalisée notamment à partir d'une liste d'adresses MAC autorisées. Si le dispositif utilisateur 32 est autorisé à accéder, l'établissement de la connexion se poursuit. Si le dispositif utilisateur 32 n'est pas autorisé à accéder, le dispositif d'accès 31 vérifie si une donnée indiquant qu'une présence d'un utilisateur a été détectée dans la zone de détection Z, a été obtenue lors de l'étape E10.

Si une donnée indiquant qu'une présence d'un utilisateur a été détectée dans la zone de détection Z a été obtenue lors de l'étape E10, l'accès du dispositif utilisateur 32, identifié par son adresse MAC, au réseau d'accès radio est autorisée par le dispositif d'accès 31. L'adresse MAC du dispositif requérant est ajoutée dans la liste d'adresses MAC autorisées dans une étape E3. L'accès au réseau d'accès radio est alors autorisée par le dispositif d'accès 31 pour un dispositif d'adresse physique correspondant à celle dudit dispositif requérant 32. Un message d'acquittement M4 (« Authenticate Response ») est transmis au dispositif utilisateur 32. La connexion est ensuite établie entre le dispositif utilisateur 32 et le dispositif d'accès 31 par mise en œuvre d'une étape d'association, non détaillée ici. A l'issue de cette étape, le dispositif utilisateur 32 est associé avec le dispositif d'accès 31 sur le réseau d'accès radio et peut ainsi transmettre et recevoir des données en provenance d'autres dispositifs du réseau radio. Une connexion est ainsi établie entre le dispositif utilisateur 32 et le dispositif d'accès 31 sur le réseau d'accès radio. La gestion de la liste d'adresses MAC est ainsi simplifiée pour l'administrateur du dispositif d'accès 31. Dans une étape E4, le dispositif d'accès 31 arrête la diffusion de l'identifiant de réseau d'accès, notamment dans le signal pilote. Ceci permet de rétablir la sécurité supplémentaire apportée par l'absence de diffusion de l'identifiant de réseau.

Le procédé de contrôle d'accès est plus précisément défini en fonction des différents modes de mise en œuvre du filtrage en fonction d'adresses MAC. Comme décrit précédemment en relation avec le premier mode de réalisation, dans un mode de réalisation particulier, il est nécessaire de désactiver cette fonction, afin de pouvoir recevoir la demande d'accès M3. Cette désactivation est effectuée suite à l'exécution de l'étape E11. Une temporisation T est alors déclenchée afin de superviser la réception de la demande d'accès. Une fois la temporisation expirée, la fonction de filtrage en fonction d'adresses MAC est activée de nouveau. En effet, le réseau d'accès radio ne doit pas rester ouvert pour autoriser de nouveaux dispositifs pendant un intervalle temporel trop important. A titre d'exemple illustratif, la temporisation T est fixée à cinq minutes. Dans un mode de réalisation particulier complémentaire, la fonction de filtrage en fonction d'adresses MAC est activée de nouveau, une fois une demande d'accès traitée par le dispositif d'accès. Un seul dispositif utilisateur est ainsi autorisé à la fois.

Dans un autre mode de réalisation, la fonction de filtrage en fonction d'adresses MAC reste activée. Le dispositif utilisateur 32 est alors en attente d'autorisation et devient autorisé suite à l'obtention de la donnée à l'étape E11.

Dans un autre mode de réalisation, une donnée indiquant qu'une sortie d'un utilisateur de la zone de détection a été détectée est obtenue. Dans ce cas, la diffusion de l'identifiant de réseau d'accès radio est arrêtée ; le réseau devient de nouveau masqué. Il est également possible de refuser l'accès au réseau d'accès radio pour une demande reçue après obtention de cette donnée. Ainsi, le réseau d'accès radio ne reste pas visible et ouvert pour autoriser de nouveaux dispositifs, une fois la sortie de la zone de détection détectée.

Ces modes de réalisation ont été décrits pour une configuration du filtrage en fonction d'adresses MAC mise en œuvre pour une réception d'une demande d'accès correspondant à un message « Authenticate Request ». Dans un autre mode de réalisation, la configuration du filtrage en fonction d'adresses MAC est mise en œuvre après authentification du dispositif utilisateur 32 avec le dispositif d'accès 31. La demande d'accès M3 correspond alors à un message « Association Request » envoyé par le dispositif utilisateur 32 et le message d'acquittement M4 correspond à un message «Association Response ». Dans encore un autre mode de réalisation, le réseau d'accès radio n'est pas protégé par une clé de sécurité. La demande d'accès M3 correspond alors à un message « Association Request » envoyé par le dispositif utilisateur 32 et le message d'acquittement M4 correspond à un message « Association Response ».

Le procédé de contrôle d'accès est ainsi aisément transposable par l'homme du métier en fonction de la mise en œuvre du filtrage en fonction d'adresses MAC au niveau du dispositif d'accès 31.

Ces modes de réalisation particuliers sont également applicables à une mise en œuvre où le dispositif d'accès est configuré en outre à l'état initial pour ne pas répondre à des messages de découverte, ou « Probe Request », envoyés par des dispositifs utilisateur et demandant aux dispositifs d'accès de se déclarer. Dans ce cas, à l'étape E11, le dispositif d'accès est agencé pour répondre à de tels messages de découverte en diffusant son identifiant de réseau d'accès.

Nous allons maintenant décrire un dispositif d'accès 31 à un réseau d'accès radio dans un mode particulier de réalisation en référence à la figure 4. Un tel dispositif comprend notamment :
- une zone mémoire 311, agencée pour mémoriser un programme qui comprend des instructions de code pour mettre en œuvre les étapes du procédé de contrôle d'accès, tel que décrit en relation avec les figures 3a et 3b ;
- une mémoire de stockage 316, agencée pour stocker des données utilisées lors de la mise en œuvre du procédé de contrôle d'accès, tel que décrit précédemment, notamment des données d'adresses MAC autorisées :
   - un processeur 310 pour exécuter des instructions de code de modules logiciels ;
   - un module 312 d'accès radio, agencé pour communiquer sur le réseau d'accès radio avec des dispositifs utilisateur, sur un canal de communication du réseau d'accès radio, notamment pour recevoir en provenance d'un dispositif requérant 32, 33 une demande d'accès au réseau d'accès radio ;
   - un module 313 de détection de présence, agencé pour obtenir une donnée indiquant qu'une présence d'un utilisateur a été détectée dans une zone de détection ;
   - un module 314 de gestion d'adresses, agencé pour autoriser un accès au réseau d'accès radio au dispositif requérant identifié par ladite adresse, activé suite à l'obtention de ladite donnée, l'accès au réseau d'accès radio étant interdit préalablement pour un dispositif d'adresse physique correspondant à celle dudit dispositif requérant ;
   - un module 315 de filtrage en fonction d'adresses MAC, agencé pour bloquer un accès d'un dispositif d'adresse physique dont l'adresse n'est pas autorisée.

Il est ici souligné que le dispositif d'accès 31 comprend également d'autres modules de traitement, non représentés sur la figure 4, agencés pour mettre en œuvre les différentes fonctions d'un tel dispositif.

Le module 312 d'accès radio permet un accès à un réseau d'accès radio sans fil de type Wi-Fi.

Le module 313 de détection de présence est par exemple un capteur détecteur de présence.

Dans un mode de réalisation particulier, le module 313 est agencé pour obtenir une autre donnée indiquant qu'une sortie d'un utilisateur de la zone de détection a été détectée et pour commander une désactivation du module 314 de gestion d'adresses. L'accès au réseau d'accès radio est alors refusé après obtention de cette autre donnée.

Dans un mode de réalisation particulier, le module 312 d'accès radio est notamment agencé pour diffuser ou non un identifiant du réseau d'accès radio. Le module 313 d'obtention d'une donnée est notamment agencé pour déclencher la diffusion suite à l'obtention de la donnée et pour arrêter la diffusion de l'identifiant du réseau d'accès radio en fonction de conditions telles que l'expiration d'un intervalle temporel postérieur à la réception de la donnée, une obtention d'une autre donnée indiquant qu'une sortie d'un utilisateur de la zone de détection a été détectée, une réception d'une demande d'accès.

Dans un mode de réalisation particulier, le dispositif d'accès 31 comprend en outre un module de sécurité, agencé pour vérifier qu'un dispositif partage avec lui une clé de sécurité, avant d'autoriser une connexion au réseau d'accès radio, et pour protéger ensuite les échanges.

La technique de contrôle d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 314, 315 sont agencés pour mettre en œuvre le procédé de contrôle d'accès précédemment décrit. Il s'agit de préférence de modules logiciels comprenant des instructions logicielles pour faire exécuter celles des étapes du procédé de contrôle d'accès précédemment décrit, mises en œuvre par un dispositif d'accès. L'invention concerne donc aussi :
- un programme pour un dispositif d'accès, comprenant des instructions de code de programme destinées à commander l'exécution des étapes du procédé de contrôle d'accès précédemment décrit, lorsque ledit programme est exécuté par ce dispositif d'accès ;
- un support d'enregistrement lisible par un dispositif d'accès sur lequel est enregistré le programme pour un dispositif.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de contrôle d'accès décrit précédemment.

## Revendications

1. Procédé de contrôle d'accès à un réseau d'accès radio administré par un dispositif d'accès (31), ledit procédé comprenant :
- obtention par le dispositif d'accès (E1, E10) d'une donnée indiquant qu'une présence d'un utilisateur a été détectée dans une zone de détection ;
- diffusion (E11) par le dispositif d'accès d'un identifiant du réseau d'accès radio déclenchée par ladite obtention d'une donnée ;
- réception (E2) par le dispositif d'accès en provenance d'un dispositif requérant (32, 33) d'une demande d'accès (M3) au réseau d'accès radio par l'intermédiaire du réseau d'accès radio, ladite demande d'accès comprenant une adresse physique identifiant le dispositif requérant, l'accès au réseau d'accès radio étant interdit par le dispositif d'accès pour un dispositif d'adresse physique correspondant à celle dudit dispositif requérant ;
- autorisation (E3), par le dispositif d'accès, d'accès au réseau d'accès radio du dispositif requérant identifié par ladite adresse lorsqu'une donnée indiquant qu'une présence d'un utilisateur a été détectée dans la zone de détection a été obtenue.

2. Procédé de contrôle d'accès selon la revendication 1, dans lequel l'autorisation est donnée uniquement lorsque la demande d'accès est reçue pendant un intervalle temporel postérieur à ladite obtention.

3. Procédé de contrôle d'accès selon la revendication 1, comprenant en outre une obtention d'une autre donnée indiquant qu'une sortie d'un utilisateur de la zone de détection a été détectée, et dans lequel l'accès au réseau d'accès radio est refusé après obtention de ladite autre donnée.

4. Dispositif d'accès (31) à un réseau d'accès radio, ledit dispositif comprenant ;
- un module (313) d'obtention d'une donnée, agencé pour obtenir une donnée indiquant qu'une présence d'un utilisateur a été détectée dans une zone de détection et pour déclencher la diffusion d'un identifiant du réseau d'accès radio suite à l'obtention de la donnée ;
- un module (312) de réception, agencé pour recevoir en provenance d'un dispositif requérant (32, 33) une demande d'accès (M3) au réseau d'accès radio par l'intermédiaire du réseau d'accès radio, ladite demande d'accès comprenant une adresse physique identifiant le dispositif requérant ;
- un module (314) de gestion d'adresses, agencé pour autoriser un accès au réseau d'accès radio au dispositif requérant identifié par ladite adresse, lorsqu'une donnée indiquant qu'une présence d'un utilisateur a été détectée dans la zone de détection a été obtenue, l'accès au réseau d'accès radio étant interdit préalablement pour un dispositif d'adresse physique correspondant à celle dudit dispositif requérant.

5. Programme pour un dispositif d'accès, comprenant des instructions de code de programme destinées à commander l'exécution des étapes du procédé de contrôle d'accès selon l'une des revendications 1 à 3 mises en œuvre par le dispositif d'accès, lorsque ledit programme est exécuté par ledit dispositif.

6. Support d'enregistrement lisible par un dispositif d'accès sur lequel est enregistré le programme selon la revendication 5.

## Patentansprüche

1. Verfahren zur Steuerung des Zugangs zu einem Funkzugangsnetz, das von einer Zugangsvorrichtung (31) verwaltet wird, wobei das Verfahren Folgendes beinhaltet:
- Erhalten, durch die Zugangsvorrichtung (E1, E10), eines Datenelements, das anzeigt, dass die Gegenwart eines Benutzers in einem Erkennungsbereich erkannt wurde;
- Senden (E11), durch die Zugangsvorrichtung, einer Kennung des Funkzugangsnetzes, ausgelöst durch das Erhalten eines Datenelements;
- Empfangen (E2), durch die Zugangsvorrichtung von einer anfordernden Vorrichtung (32, 33), einer Anfrage (M3) nach Zugang zu dem Funkzugangsnetz über das Funkzugangsnetz, wobei die Zugangsanfrage eine physische Adresse beinhaltet, die die anfordernde Vorrichtung identifiziert, wobei einer Vorrichtung mit einer physischen Adresse, die der der anfordernden Vorrichtung entspricht, der Zugang zu dem Funkzugangsnetz durch die Zugangsvorrichtung untersagt ist;
- Genehmigen (E3), durch die Zugangsvorrichtung, eines Zugangs der anfordernden Vorrichtung, die durch die Adresse identifiziert wird, zu dem Funkzugangsnetz, wenn ein Datenelement erhalten wurde, das anzeigt, dass eine Gegenwart eines Benutzers in dem Erkennungsbereich erkannt wurde.

2. Verfahren zur Steuerung des Zugangs nach Anspruch 1, wobei die Genehmigung nur dann erteilt wird, wenn die Zugangsanfrage während eines Zeitraums, der nach dem Erhalten liegt, empfangen wird.

3. Verfahren zur Steuerung des Zugangs nach Anspruch 1, das ferner das Erhalten eines anderen Datenelements beinhaltet, das anzeigt, dass ein Verlassen eines Benutzers des Erkennungsbereich erkannt wurde, und wobei der Zugang zu dem Funkzugangsnetz nach dem Erhalten des anderen Datenelements verweigert wird.

4. Vorrichtung (31) für den Zugang zu einem Funkzugangsnetz, wobei die Vorrichtung Folgendes beinhaltet:
- ein Modul (313) zum Erhalten eines Datenelements, das zum Erhalten eines Datenelements, das anzeigt, dass eine Gegenwart eines Benutzers in einem Erkennungsbereich erkannt wurde, und zum Auslösen des Sendens einer Kennung des Funkzugangsnetzes im Anschluss an das Erhalten des Datenelements eingerichtet ist;
- ein Empfangsmodul (312), das zum Empfangen, von einer anfordernden Vorrichtung (32, 33), einer Anfrage (M3) nach Zugang zu dem Funkzugangsnetz über das Funkzugangsnetz eingerichtet ist, wobei die Zugangsanfrage eine physische Adresse beinhaltet, die die anfordernde Vorrichtung identifiziert;
- ein Adressenverwaltungsmodul (314), das zum Genehmigen eines Zugangs der anfordernden Vorrichtung, die durch die Adresse identifiziert wird, zu dem Funkzugangsnetz eingerichtet ist, wenn ein Datenelement, das anzeigt, dass eine Gegenwart eines Benutzers in dem Erkennungsbereich erkannt wurde, erhalten wurde, wobei einer Vorrichtung mit einer physischen Adresse, die der der anfordernden Vorrichtung entspricht, der Zugang zu dem Funkzugangsnetz zuvor untersagt ist.

5. Programm für eine Zugangsvorrichtung, das Programmcodeanweisungen beinhaltet, die dazu bestimmt sind, die Ausführung der Schritte des Verfahrens zur Steuerung des Zugangs nach einem der Ansprüche 1 bis 3, die von der Zugangsvorrichtung durchgeführt werden, zu steuern, wenn das Programm von der Vorrichtung ausgeführt wird.

6. Von einer Zugangsvorrichtung lesbares Aufzeichnungsmedium, auf dem das Programm nach Anspruch 5 aufgezeichnet ist.

## Claims

1. Method for controlling access to a radio access network administered by an access device (31), said method comprising:
- obtainment (E1, E10), by the access device, of a data value indicating that the presence of a user has been detected within a detection area;
- broadcast (E11), by the access device, of an identifier of the radio access network triggered by said obtainment of a data value;
- receipt (E2), by the access device, of a request (M3) for access to the radio access network coming from a requesting device (32, 33) via the radio access network, said access request comprising a physical address identifying the requesting device, the access to the radio access network being prohibited by the access device for a device with a physical address corresponding to that of said requesting device;
- authorization (E3), by the access device, of access to the radio access network for the requesting device identified by said address when a data value indicating that the presence of a user has been detected in the detection area has been obtained.

2. Access control method according to Claim 1, in which the authorization is given only when the access request is received within an interval of time following said obtainment.

3. Access control method according to Claim 1, furthermore comprising the obtainment of another data value indicating that the exit of a user from the detection area has been detected, and in which the access to the radio access network is refused after the obtainment of said other data value.

4. Device (31) for accessing a radio access network, said device comprising:
- a module (313) for obtaining a data value, configured to obtain a data value indicating that the presence of a user has been detected within a detection area and to trigger the transmission of an identifier of the radio access network following the obtainment of the data value;
- a receiver module (312), configured to receive a request for access (M3) to the radio access network coming from a requesting device (32, 33) via the radio access network, said access request comprising a physical address identifying the requesting device;
- an address management module (314), configured to authorize an access to the radio access network by the requesting device identified by said address, when a data value indicating that the presence of a user has been detected in the detection area has been obtained, the access to the radio access network being previously prohibited for a device with a physical address corresponding to that of said requesting device.

5. Program for an access device, comprising program code instructions designed to control the execution of the steps of the access control method according to one of Claims 1 to 3 implemented by the access device, when said program is executed by said device.

6. Storage medium readable by an access device on which the program according to Claim 5 is recorded.
